# EUROPÄISCHE PATENTSCHRIFT

(11) **EP 3 953 645 B1**
(45) Veröffentlichungstag und Bekanntmachung des Hinweises auf die Patenterteilung: **24.12.2025**
(21) Anmeldenummer: 20720384.5
(22) Anmeldetag: 14.04.2020
(51) Int. Cl.: F24C 15/20, F24C 15/32, A21B 3/04, F24C 15/00

(54) **VORRICHTUNG ZUM ERHITZEN VON GARGUT**
DEVICE FOR HEATING COOKING PRODUCTS
DISPOSITIF POUR FAIRE CHAUFFER UN ALIMENT À CUIRE

(30) Priorität: 12.04.2019 DE 102019205337
(43) Veröffentlichungstag der Anmeldung: 16.02.2022
(73) Patentinhaber: Werkhaus GmbH & Co. KG, 83064 Raubling (DE)
(72) Erfinder: APPEL, Nikolaus, 6342 Niederndorf (AT); KÖNNEKER, Walter, 6342 Niederndorf (AT)
(74) Vertreter: Rau, Schneck & Hübner Patentanwälte Rechtsanwälte PartGmbB
(86) Internationale Anmeldenummer: PCT/EP2020/060413
(87) Internationale Veröffentlichungsnummer: WO 2020/208256

(56) Entgegenhaltungen:
- EP-A2- 0 732 549
- DE-C1- 10 245 773

## Beschreibung

Die Erfindung betrifft eine Vorrichtung zum Erhitzen von Gargut. Die Erfindung betrifft außerdem ein Verfahren zum Betreiben einer Vorrichtung zum Erhitzen von Gargut.

Backöfen und Dampfgarer sind in unterschiedlichen Ausführungen aus dem Stand der Technik bekannt. Exemplarisch sei auf die DE 27 05 395 A1, die DE 44 07 702 A1, die DE 101 58 425 C1, die US 3,587,555 und die EP 1 436 550 B2 verwiesen. Es besteht fortwährend Bedarf, derartige Vorrichtungen weiterzuentwickeln. Die EP 0 732 549 A2 zeigt einen Ofen zur Wärmebehandlung von Lebensmitteln und ein Verfahren zum Backen. Der Erfindung liegt die Aufgabe zugrunde, eine Vorrichtung zum Erhitzen von Gargut zu verbessern.

Diese Aufgabe wird durch eine Vorrichtung gemäß Anspruch 1 gelöst.

Der Kern der Erfindung besteht darin, die Vorrichtung mit einer steuerbaren Lüftungseinrichtung zu versehen, welche mindestens ein Steuerungsmittel zur Steuerung der Absaugung der Abluft aus dem Aufnahmeraum und mindestens ein Steuerungsmittel zur Steuerung einer Frischluftzufuhr durch mindestens einen Frischlufteinlass zum Aufnahmeraum aufweist.

Hierdurch ist es möglich, die Atmosphäre, insbesondere die Temperatur und/oder Feuchtigkeit im Aufnahmeraum präzise zu steuern. Es ist insbesondere möglich, die Atmosphäre im Aufnahmeraum zu regeln.

Unter Atmosphäre im Aufnahmeraum sei hier insbesondere das gasförmige Medium im Aufnahmeraum mit dessen Temperatur und Feuchtigkeitsgehalt bezeichnet.

Ein besonderer Vorteil besteht darin, dass die steuerbare Lüftungseinrichtung es ermöglicht, die Luft im Aufnahmeraum schnell, insbesondere innerhalb von weniger Sekunden, auszutauschen. Hierdurch kann eine erhöhte Betriebssicherheit erreicht werden. Außerdem ist es hierdurch möglich, den Garprozess genauer zu kontrollieren, insbesondere ein Übergaren am Ende bzw. nach Abschluss des Garprozesses zu verhindern.

Gemäß einem weiteren Aspekt der Erfindung ermöglicht es die Lüftungseinrichtung, die aus dem Aufnahmeraum abgesaugte Abluft zu reinigen. Hierdurch lassen sich unerwünschte Geruchsbelästigungen und/oder Verunreinigungen vermeiden.

Bei der Vorrichtung handelt es sich beispielsweise um einen Backofen, insbesondere um einen Dampfbackofen, oder einen Dampfgarer. Es kann sich auch um ein Mikrowellengerät oder ein Kombinationsgerät mit einer Auswahl aus den Funktionen eines Backofens, eines Dampfgarers und eines Mikrowellengerätes handeln. Allgemein handelt es sich bei der Vorrichtung um ein Küchengerät.

Gemäß der Erfindung ermöglicht die Lüftungseinrichtung mindestens drei unterschiedliche Funktionsmodi:
- In einem ersten Funktionsmodus ist die Frischluftzufuhr zum Aufnahmeraum unterbunden,
- in einem zweiten Funktionsmodus ist sowohl eine Zuführung von

Frischluft zum Aufnahmeraum als auch eine Zuführung von Kühlluft zum Luftstrom der aus dem Aufnahmeraum abgesaugten Abluft ermöglicht, und
- in einem dritten Funktionsmodus ist eine Zuführung von Kühlluft zum Luftstrom der aus dem Aufnahmeraum abgesaugten Abluft unterbunden.

Der dritte Funktionsmodus ermöglicht eine sehr schnelle Absaugung der Abluft aus dem Aufnahmeraum. Dies ist insbesondere zum Öffnen der Türe des Aufnahmeraums und/oder am Ende des Garprozesses vorteilhaft.

Unter Frischluft sei hier und im Folgenden Luft verstanden, welche von außerhalb des Gehäuses der Vorrichtung in das Gehäuse angesaugt wird. Unter Abluft sei Luft aus dem Aufnahmeraum verstanden. Die Abluft kann insbesondere Wrasen, das heißt Kochdünste, und/oder Dampf, insbesondere auch fetthaltigen Dampf, umfassen.

Mit Hilfe der erfindungsgemäßen Vorrichtung ist es möglich, ein unkontrolliertes Einleiten der Abluft in die Küche zu verhindern. Es ist insbesondere möglich, die Abluft zu reinigen, bevor sie aus dem Gehäuse herausgeführt wird.

Der Kern der Erfindung besteht darin, unterschiedliche Funktionsmodi bereitzustellen, welche sich dadurch unterscheiden, welcher Anteil des vom Lüfter erzeugten Volumenstroms durch die aus dem Aufnahmeraum abgesaugte Abluft gebildet werden.

Die Angaben zum Anteil der aus dem Aufnahmeraum abgesaugten Abluft am vom Lüfter erzeugten Volumenstrom beziehen sich hierbei auf den Bereich des mindestens einen Mittels zur Reinigung von Abluft, insbesondere eines Filters, und/oder auf den Bereich einer Ansaugöffnung des mindestens einen Lüfters zur Erzeugung des Volumenstroms und/oder auf einen Bereich eines Gehäuseauslasses.

In einem ersten Funktionsmodus weist der vom Lüfter erzeugte Volumenstrom einen Anteil von höchstens 10 % aus dem Aufnahmeraum abgesaugter Abluft auf. Eine derart geringe Absaugung von Abluft aus dem Aufnahmeraum ist beispielsweise bei der Betriebsart Dämpfen oder Kombidämpfen vorteilhaft. Der Volumenstrom kann in diesem Fall primär zur Kühlung von elektrischen oder elektronischen Bauteilen dienen.

In einem zweiten Funktionsmodus beträgt der Anteil der aus dem Aufnahmeraum abgesaugten Abluft am vom Lüfter erzeugten Volumenstrom mindestens 10 % und höchstens 90 %. Dies ist beispielsweise für einen Heißluftmodus und/oder zur Dampfreduktion im Aufnahmeraum vorteilhaft.

In einem dritten Funktionsmodus weist der vom Lüfter erzeugte Volumenstrom einen Anteil von mindestens 90 % von auf dem Aufnahmeraum abgesaugter Abluft auf. Dies ist insbesondere zur schnellen Absaugung der Abluft aus dem Aufnahmeraum und/oder zur Abkühlung des Aufnahmeraums vorteilhaft. Die Absaugung der Abluft aus dem Aufnahmeraum wird auch als Evakuierung des Aufnahme- oder Garraums bezeichnet. Der Begriff "Evakuierung" impliziert in diesem Fall nicht, zumindest nicht notwendigerweise, dass hierbei ein Unterdruck im Aufnahmeraum erzeugt wird.

Gemäß einem Aspekt sind eines oder mehrere der Steuerungsmittel zur Steuerung der Absaugung der Abluft aus dem Aufnahmeraum, zur Steuerung einer Frischluftzufuhr durch den mindestens einen Frischlufteinlass zum Aufnahmeraum und zur Steuerung einer Zuführung des Luftstroms der in das Gehäuse eingesaugten Frischluft zum Luftstrom der aus dem Aufnahmeraum abgesaugten Abluft stufenlos steuerbar. Sie können insbesondere zwischen vollständig geöffnet und vollständig geschlossen verstellbar sein. Sie können insbesondere beliebige Zwischenstellungen aufweisen. Alternativ hierzu können sie auch eine vorgegebene Anzahl diskreter Stellungen aufweisen.

Eine stufenlose Verstellbarkeit ermöglicht eine flexiblere Steuerung. Diskrete Einstellungen können die Ansteuerung der Steuerungsmittel vereinfachen.

Gemäß einem weiteren Aspekt der Erfindung ist die Lüftungseinrichtung derart ausgebildet, dass eine Ansaugung von Frischluft von der Vorderseite des Gehäuses her ermöglicht ist. Alternativ oder zusätzlich ist auch eine Ansaugung von Frischluft von hinten möglich. Es ist insbesondere möglich die Frischluft, welche durch den Frischlufteinlass dem Aufnahmeraum zugeführt wird, von der Geräterückseite her anzusaugen. Sie kann insbesondere führungslos angesaugt werden.

Gemäß einem weiteren Aspekt sind zwei oder mehr der Steuerungsmittel direkt oder indirekt miteinander gekoppelt. Es ist insbesondere möglich, sämtliche Steuerungsmittel miteinander gekoppelt auszuführen. Erfindungsgemäß sind die Steuerungsmittel in signalübertragende Weise mit einer gemeinsamen zentralen Steuereinrichtung verbunden. Hierdurch kann die Betriebssicherheit erhöht werden. Außerdem kann hierdurch die Steuerung vereinfacht werden.

Gemäß einem weiteren Aspekt der Erfindung weisen eines oder mehrere der Steuerungsmittel einen regelbaren Steller auf. Sie können insbesondere ein Ventil und/oder eine Stellklappe und/oder einen oder mehrere Luftschieber aufweisen. Sie können insbesondere als Ventil oder Stellklappe ausgebildet sein.

Dies ermöglicht eine besonders einfache, zuverlässige und robuste Steuerung der Luftströme.

Gemäß einem weiteren Aspekt der Erfindung weist das Mittel zur Reinigung von Abluft mindestens ein Filtermodul mit mindestens einem Geruchsfilter auf.

Mit Hilfe des Filtermoduls ist die im Aufnahmeraum während des Garvorgangs entstehende Abluft während des Garvorgangs reinigbar. Die Abluft kann insbesondere von Geruch und/oder Fett und/oder Partikeln gereinigt werden.

Dieser Aspekt der Erfindung kann auch unabhängig von den Details der steuerbaren Lüftungseinrichtung verwirklicht sein.

Gemäß einem weiteren Aspekt der Erfindung ist das mindestens eine Filtermodul, insbesondere der Geruchsfilter, von der Vorderseite des Gehäuses der Vorrichtung her aus dieser entnehmbar.

Gemäß einem weiteren Aspekt der Erfindung ist das Mittel zur Reinigung von Abluft, insbesondere das Filtermodul, insbesondere der Geruchsfilter, von der Vorderseite des Gehäuses aus werkzeuglos austauschbar.

Dies erleichtert eine Auswechselbarkeit des Reinigungsmittels.

Das Reinigungsmittel, insbesondere der Geruchsfilter, kann wiederaufbereitbar sein.

Das Filtermodul kann insbesondere teilweise oder als Ganzes gereinigt werden.

Gemäß einem weiteren Aspekt der Erfindung ist das Mittel zur Reinigung von Abluft im Strömungsleitsystem in Strömungsrichtung vor dem Lüfter angeordnet.

Hierdurch werden Verschmutzungen des Lüfters vermieden.

Gemäß einem weiteren Aspekt der Erfindung kann im Strömungsweg vor dem Filtermodul eine Bypassklappe, ein Bypassventil oder ein Bypassschieber angeordnet sein, mit welchem ein alternativer Strömungsweg geöffnet oder verschlossen werden kann. Auf diese Weise ist es möglich, die Abluft am Filtermodul vorbeizuleiten. Dies ist insbesondere für den dritten Funktionsmodus, bei welchem der vom Lüfter erzeugte Volumenstrom hauptsächlich aus dem Aufnahmeraum abgesaugte Abluft aufweist, nützlich. Mit Hilfe eines derartigen alternativen, regelbaren Strömungswegs kann der Druckverlust, insbesondere im dritten Funktionsmodus, weiter verringert werden. Außerdem kann hierdurch allgemein die Energieeffizienz des Geräts verbessert werden.

Gemäß einem weiteren Aspekt der Erfindung kann der alternative Strömungsweg stufenlos geregelt werden. Er kann insbesondere parallel zum Strömungsweg durch das Filtermodul vorgesehen sein. In diesem Falle ist es möglich, zu steuern, insbesondere zu regeln, insbesondere in Abhängigkeit von sensorisch erfassten Parametern zu regeln, welcher Anteil des Volumenstroms durch das Filtermodul geleitet wird und welcher Anteil durch den Bypass.

Das Filtermodul, insbesondere der Geruchsfilter, kann auf Basis von Aktivkohle, Plasma, der UV-Fotokatalyse oder einer Kombination dieser Optionen basieren.

Der Geruchsfilter kann insbesondere ein Halteelement aufweisen. Mittels des Halteelements ist der Geruchsfilter auf einfache Weise, in der Vorrichtung, insbesondere im Strömungsleitsystem, anordbar,

Der Geruchsfilter kann quaderförmig ausgebildet sein. Er kann eine Länge von mindestens 20 cm, insbesondere mindestens 30 cm, insbesondere mindestens 40 cm aufweisen.

Er kann eine Breite von mindestens 5 cm, insbesondere mindestens 10 cm, insbesondere mindestens 15 cm, insbesondere mindestens 18 cm aufweisen.

Er kann eine Tiefe von mindestens 1 cm, insbesondere mindestens 2,5 cm, insbesondere mindestens 4,8 cm aufweisen.

Diese Werte haben sich als vorteilhaft erwiesen, um eine ausreichend hohe Filterung bei gleichzeitig möglichst geringem Strömungswiderstand zu ermöglichen.

Gemäß einem weiteren Aspekt der Erfindung ist das Steuerungsmittel zur Steuerung der Frischluftzufuhr zum Aufnahmeraum durch den mindestens einen Frischlufteinlass in signalübertragender Weise an eine Sensoreinrichtung im Aufnahmeraum gekoppelt. Mittels der Sensoreinrichtung ist beispielsweise die Temperatur und/oder Feuchtigkeit der Atmosphäre im Aufnahmeraum erfassbar.

Auf diese Weise ist es möglich, die Atmosphäre im Aufnahmeraum, insbesondere die Temperatur und/oder die Feuchte, flexibel und präzise zu steuern, insbesondere zu regeln.

Gemäß einem weiteren Aspekt der Erfindung ist das Steuerungsmittel zur Steuerung der Absaugung der Abluft aus dem Aufnahmeraum an eine Sensoreinrichtung im Aufnahmeraum gekoppelt. Hierbei kann es sich um die bereits vorstehend erwähnte Sensoreinrichtung handeln.

Hierdurch ist es möglich, die Absaugung der Abluft aus dem Aufnahmeraum flexibel und präzise zu steuern.

Gemäß einem weiteren Aspekt der Erfindung umfasst die Vorrichtung eine steuerbare Pumpe, mittels welcher Abluft und/oder Feuchtigkeit aus dem Aufnahmeraum durch den mindestens einen Fluidauslass abgepumpt werden kann.

Hierdurch kann eine Entfernung von Abluft und/oder Feuchtigkeit aus dem Aufnahmeraum verbessert werden. Mittels einer separaten Pumpe ist insbesondere ein Austausch der Atmosphäre im Aufnahmeraum schnell und einfach möglich.

Gemäß einem weiteren Aspekt der Erfindung ist ausgangsseitig zum Fluidauslass des Aufnahmeraums eine Einrichtung zur Kondensation von in der aus dem Aufnahmeraum abgesaugten Abluft enthaltenem Wasserdampf angeordnet.

Bei der Kondensationseinrichtung kann es sich um eine Kondensiereinrichtung mit einer Wasserkühlung handeln. Es ist insbesondere möglich, die Abluft durch ein Reservoir mit Kühlwasser hindurchzuführen. Dies führt zu einer Kondensation von in der Abluft enthaltenen Wasserdampf. Dies führt außerdem zu einer Reinigung der Abluft.

Gemäß einem weiteren Aspekt der Erfindung kann durch ein Absenken des Wasserniveaus in der Kondensiereinrichtung während der Absaugung der Lüfterquerschnitt erhöht werden. Dies führt zu einer Leistungssteigerung der Absaugung.

Das Wasserreservoir kann einen Festwasseranschluss aufweisen. Es kann insbesondere einen Frischwassereinlauf und eine Abwasserableitung aufweisen. Dies ermöglicht auch eine einfache Reinigung des Wasserreservoirs.

Gemäß einem weiteren Aspekt der Erfindung kann die Kondensationseinrichtung zusammen mit dem Aufnahmeraum gereinigt werden. Hierfür kann ein spezielles Reinigungsprogramm vorgesehen sein.

Das Gehäuse kann insbesondere eine Einlassöffnung zur Ansaugung von Frischluft an der Vorderseite oder im Bereich der Vorderseite aufweisen. Hierunter sei ein Bereich mit einem Abstand von maximal 20 cm, insbesondere maximal 10 cm, insbesondere maximal 5 cm zur Vorderseite verstanden.

Gemäß einem weiteren Aspekt ist die Lüftungseinrichtung derart ausgebildet, dass eine Abführung von Abluft an der Rückseite des Gehäuses ermöglicht ist. Das Gehäuse kann insbesondere eine Auslassöffnung im Bereich seiner Rückseite aufweisen.

An die Auslassöffnung kann sich eine Abluftführung, insbesondere in Form eines Abluftkanalsystems, anschließen. Das Kanalsystem kann modular ausgebildet sein. Es kann insbesondere Lüftungskanäle und/oder Lüftungsschläuche aufweisen.

Es ist insbesondere möglich, die Abluft flexibel von dem Gehäuse zu einem hiervon separaten Raumbereich zu führen. Die Abluft kann beispielsweise in den Sockelbereich eines Küchenschranks geführt werden. Die Abluft kann prinzipiell auch nach außen weggeführt werden.

Gemäß einem weiteren Aspekt der Erfindung ist der Lüfter zur Erzeugung eines Volumenstroms im Bereich von 1 m³/h bis 500 m³/h steuerbar.

Erfindungsgemäß wurde erkannt, dass es für eine schnelle Absaugung der Abluft aus dem Aufnahmeraum vorteilhaft ist, wenn der Lüfter, zumindest kurzzeitig, einen wesentlich höheren Volumenstrom erzeugen kann als der im normalen Garmodus üblicherweise benötigte. Im normalen Garmodus liegt der vom Lüfter erzeugte Volumenstrom insbesondere im Bereich von bis zu 20 m³/h. Ein Volumenstrom von mehr als 40 m³/h ermöglicht einen kompletten Austausch der Atmosphäre im Aufnahmeraum in weniger als 15 s, insbesondere weniger als 10 s, insbesondere weniger als 5 s, insbesondere weniger als 3 s.

Der Volumenstrom zur Evakuierung liegt insbesondere im Bereich von 40 m³/h bis 80 m³/h. Er kann auch bis zu 100 m³/h oder mehr betragen.

Als Lüfter zur Erzeugung des Volumenstroms kann insbesondere ein Radiallüfter dienen. Es ist auch möglich, einen Axiallüfter oder einen Querstromlüfter zu verwenden.

Gemäß einem weiteren Aspekt der Erfindung weist die Vorrichtung zum Erhitzen des Garguts eine Steuereinrichtung zur Steuerung der Temperatur und/oder der Feuchte im Aufnahmeraum auf. Die Vorrichtung zum Erhitzen des Garguts kann insbesondere unterschiedliche Heizelemente aufweisen. Dies ermöglicht eine besonders flexible Erhitzung des Garguts. Es sind insbesondere unterschiedliche Erhitzungsmodi möglich.

Gemäß einem weiteren Aspekt der Erfindung ist eine Türe zum Verschluss der Öffnung zur Bestückung des Aufnahmeraums mit Gargut in signalübertragender Weise mit einer Verriegelungsvorrichtung gekoppelt, welche ein Öffnen der Türe in Abhängigkeit von einem oder mehreren Parametern zulässt oder verhindert.

Die Verriegelungsvorrichtung kann beispielsweise an die bereits erwähnte Sensoreinrichtung im Aufnahmeraum gekoppelt sein. Hierdurch ist es möglich, ein Öffnen der Türe des Aufnahmeraums nur dann zuzulassen, wenn die Temperatur und/oder Feuchte im Aufnahmeraum niedriger ist als ein vorgegebener Grenzwert. Hierdurch kann insbesondere verhindert werden, dass beim Öffnen der Türe zum Aufnahmeraum eine große Dampfmenge aus diesem austritt. Ein derartiger Dampfaustritt ist für den Nutzer in der Regel unangenehm, wenn nicht sogar gefährlich.

Gemäß einem Aspekt der Erfindung ist vorgesehen, den Aufnahmeraum vor Entriegelung der Türe zu evakuieren, das heißt die Abluft zumindest weitestgehend aus dem Aufnahmeraum abzusaugen. Hierzu kann die Steuereinrichtung derart ausgebildet sein, dass zum Öffnen der Tür ein derartiger Wunsch angemeldet werden muss, woraufhin mittels der Sensoreinrichtung der Zustand der Atmosphäre im Aufnahmeraum überprüft wird. Sofern Temperatur und/oder Feuchte im Aufnahmeraum niedriger sind als ein vorgegebener Grenzwert, wird die Türe entriegelt; andernfalls wird der Dritte Funktionsmodus der Lüftungseinrichtung gestartet, um den Aufnahmeraum zu evakuieren.

Bei der Verriegelungsvorrichtung kann es sich insbesondere um eine elektronische oder elektronisch gesteuerte Verriegelungsvorrichtung handeln.

Gemäß einem weiteren Aspekt der Erfindung kann die Verriegelungsvorrichtung bei Bedarf unabhängig von den mittels der Sensoreinrichtung erfassten Daten, insbesondere unabhängig von der Temperatur und/oder Feuchte im Aufnahmeraum, gelöst, insbesondere entriegelt werden. Es kann insbesondere möglich sein, die Verriegelungsvorrichtung manuell zu deaktivieren, um ein Öffnen der Türe zu ermöglichen.

Eine weitere Aufgabe der Erfindung besteht darin, ein Verfahren zum Betreiben einer Vorrichtung zum Erhitzen von Gargut zu verbessern.

Diese Aufgabe wird durch die Merkmale des Anspruchs 11 gelöst.

Für Details sei auf die vorhergehende Beschreibung der Vorrichtung zum Erhitzen von Gargut verwiesen.

Mit dem erfindungsgemäßen Verfahren kann zum einen der Bedienkomfort und die Bediensicherheit erhöht werden. Es kann insbesondere sichergestellt werden, dass beim Öffnen der Türe kein heißer Dampf oder zumindest höchstens eine vorgegebene Maximalmenge an Dampf aus dem Aufnahmeraum austritt. Außerdem kann durch ein gezieltes Absaugen der Abluft aus dem Aufnahmeraum ein Ende des Garprozesses präzise gesteuert werden. Es kann insbesondere ein unerwünschtes Übergaren des Garguts verhindert werden. Hierzu kann die Atmosphäre im Aufnahmeraum am Ende des Garprozesses vollständig ausgetauscht werden. Anschließend kann ein kontrolliertes Warmhalten bei einer vorgegebenen Temperatur und/oder Feuchte erfolgen.

Weitere Vorteile und Details der Erfindung ergeben sich aus der Beschreibung von Ausführungsbeispielen anhand der Figuren. Es zeigen:
- Fig. 1: eine schematische Schnittdarstellung durch ein Gargerät mit einer steuerbaren Lüftungseinrichtung in einem ersten Funktionsmodus,
- Fig. 2: eine Darstellung gemäß Fig. 1 in einem zweiten Funktionsmodus und
- Fig. 3: eine Darstellung gemäß Fig. 1 in einem dritten Funktionsmodus.

Im Folgenden werden zunächst die Bestandteile der erfindungsgemäßen Vorrichtung beschrieben. Bei der Vorrichtung handelt es sich um eine Vorrichtung zum Erhitzen von Gargut. Sie wird im Folgenden daher als Gargerät 1 bezeichnet. Es kann sich insbesondere um ein druckloses Gargerät handeln. Es kann sich insbesondere um einen Backofen, einen Dampfgarer, einen Kombidampfgarer, das heißt einen Backofen mit Dampfgarfunktion, ein Mikrowellengerät oder ein Kombinationsgerät mit einer Auswahl aus den vorgenannten Funktionen handeln.

Das Gargerät 1 weist ein Gehäuse 2 auf. Das Gehäuse 2 umgibt einen Aufnahmeraum 3 zur Aufnahme des zu erhitzenden Garguts. Der Aufnahmeraum 3 wird auch als Garraum bezeichnet.

Das Gehäuse 2 kann im Wesentlichen quaderförmig ausgebildet sein. Es kann insbesondere eine Vorderseite 4 und eine Rückseite 5 aufweisen. Es weist insbesondere einen Boden 6 und eine Oberseite 7 auf. Es weist außerdem Seitenwände auf, welche in den Figuren nicht explizit dargestellt sind.

Das Gehäuse 2 weist insbesondere eine verschließbare Öffnung 8 zur Bestückung des Aufnahmeraums 3 mit Gargut auf. Die Öffnung 8 ist mittels eines Verschlusselements, insbesondere in Form einer Türe 9, verschließbar. Bei der Türe 9 handelt es sich insbesondere um eine Klapptüre. Die Türe ist insbesondere um eine Schwenkachse 10 verschwenkbar. Die Schwenkachse 10 befindet sich im geschlossenen Zustand der Türe 9 vorzugsweise in deren unteren Bereich. Alternative Anordnungen der Türe 9 und alternative Ausbildungen des Verschlusselements sind möglich.

Zusätzlich und separat von der Öffnung 8 zur Bestückung des Aufnahmeraums 3 mit Gargut weist das Gehäuse 2 einen Frischlufteinlass 34 und einen Abluftauslass 12 auf.

Der Frischlufteinlass 34 ist vorzugsweise im Bereich der Vorderseite 4 des Gehäuses 2 angeordnet.

Der Abluftauslass 12 befindet sich vorzugsweise im Bereich der Rückseite 5 des Gehäuses 2.

Das Gargerät 1 umfasst außerdem eine Heizeinrichtung 13, welche in den Figuren lediglich schematisch dargestellt ist. Die Heizeinrichtung 13 dient zur direkten oder indirekten Übertragung von Wärmeenergie auf das zu erhitzende Gargut. Die Heizeinrichtung 13 kann ein oder mehrere Heizelemente aufweisen. Die Heizelemente können im Inneren des Aufnahmeraums 3 oder außerhalb desselben angeordnet sein. Entsprechende Alternativen sind aus dem Stand der Technik, beispielsweise aus der DE 101 58 425 C1, bekannt.

Das Gargerät 1 weist ein Mittel zur Erzeugung einer Umluftströmung im Aufnahmeraum 3 auf. Dieses Mittel zur Erzeugung einer Umluftströmung ist in den Figuren schematisch als Lüfterrad 14 dargestellt. Es kann vorzugsweise im Bereich der Rückseite des Aufnahmeraums 3 angeordnet sein.

Außerdem umfasst das Gargerät 1 eine Lüftungseinrichtung. Die Lüftungseinrichtung kann mehrere Funktionen aufweisen. Sie kann einerseits zur Erzeugung eines Luftstroms zur Kühlung bestimmter Komponenten des Gargeräts 1 dienen. Sie kann andererseits zur Steuerung der Be- und Entlüftung des Aufnahmeraums 3 dienen. Erfindungsgemäß können diese Funktionen mit Hilfe einer einzigen Lüftungseinrichtung realisiert sein. Gemäß einer in den Figuren nicht dargestellten Alternative ist es auch möglich, zumindest teilweise separate Lüftungseinrichtungen für die unterschiedlichen Funktionen vorzusehen.

Die Lüftungseinrichtung umfasst mindestens einen, in den Figuren lediglich schematisch dargestellten Lüfter 15. Als Lüfter dient vorzugsweise ein Radiallüfter. Alternativ hierzu kann als Lüfter auch ein Axial- oder ein Querstromlüfter dienen. Auch eine Kombination unterschiedlicher Lüfter ist möglich. Die Lüftungseinrichtung kann insbesondere einen einzigen Lüfter 15 oder eine einzige Lüftereinheit mit einem oder mehreren Lüftern umfassen. Es ist beispielsweise möglich, mehrere Lüfter in einer einzigen Lüftereinheit nebeneinander anzuordnen. Hierdurch kann der für die Lüftereinheit benötigte Bauraum, insbesondere die Bauhöhe, reduziert werden. Außerdem ist eine derartige Lüftereinheit besonders flexibel ansteuerbar.

Der Lüfter 15 ist erfindungsgemäß im Bereich des Abluftauslasses 12 angeordnet.

Der Lüfter 15 dient zur Erzeugung eines Volumenstroms V° (hierbei bezeichnet V° den Volumenstrom dV/dt. Der mittels des Lüfters 15 erzeugbare Volumenstrom V° liegt im Bereich von bis zu 50 m³/h, insbesondere im Bereich von bis zu 100 m³/h, insbesondere im Bereich von bis zu 200 m³/h, insbesondere im Bereich von bis zu 300 m³/h, insbesondere im Bereich von bis zu 500 m³/h.

Außerdem umfasst die Lüftungseinrichtung ein Strömungsleitsystem 16. Das Strömungsleitsystem 16 umfasst ein erstes Teilsystem zum Führen eines Stroms mit Kühlluft 17. Die Kühlluft 17 wird durch durch den Frischlufteinlass 11 in das Gehäuse 2 angesaugte Frischluft gebildet.

Die Kühlluft 17 wird mäanderförmig durch das Strömungsleitsystem 16 geführt. Sie wird insbesondere ausgehend von dem Frischlufteinlass 11 von der Vorderseite 4 des Gehäuses 2 zunächst entlang der Oberseite des Aufnahmeraums 3 in den rückseitigen Bereich des Gehäuses 2 geführt. Sie wird sodann umgelenkt und zurück in den Bereich der Vorderseite 4 des Gehäuses 2 geführt. Dort wird sie noch einmal umgelenkt und zum Abluftauslass 12 an der Rückseite 5 des Gehäuses 2 geführt. Eine größere Anzahl an Umlenkungen, insbesondere eine größere Anzahl an Mäanderschleifen, ist ebenso möglich.

Die Kühlluft 17 wird insbesondere von vorne in das Strömungsleitsystem 16 geführt. Die Abluft 18 wird insbesondere von hinten in das Strömungsleitsystem 16 geführt.

Zur Minimierung des Druckverlustes im Strömungsleitsystem 16 sind vorzugsweise möglichst wenige Umlenkungen vorgesehen und die Strömungswege möglichst kurz ausgebildet.

Der Kühlluftstrom ist in den Figuren schematisch durch durchgezogene Pfeile dargestellt.

Weiter umfasst das Strömungsleitsystem 16 ein Teilsystem zur Führung eines Stroms mit aus dem Aufnahmeraum 3 abgesaugter Abluft 18. Der Abluftstrom ist in den Figuren schematisch durch gestrichelte Pfeile dargestellt.

Die durch den Frischlufteinlass **11** angesaugte Kühlluft 17 kann über eine Zuführöffnung 33 dem Bereich des Strömungsleitsystems 16 mit dem Strom der abgesaugten Abluft 18 zugeführt werden.

Das Strömungsleitsystem 16 dient somit zum Führen des Luftstroms mit der in das Gehäuse 2 angesaugten Frischluft und/oder zum Führen des Luftstroms mit aus dem Aufnahmeraum 3 abgesaugter Abluft 18.

Die beiden Teilsysteme überlappen teilweise. Es ist insbesondere vorgesehen, den Luftstrom mit der Kühlluft 17 gesteuert dem Luftstrom der aus dem Aufnahmeraum 3 abgesaugten Abluft 18 zuzuführen.

Zur Steuerung der Luftströmungen im Gehäuse 2 weist die Lüftungseinrichtung ein Steuerungsmittel zur Steuerung der Absaugung der Abluft 18 aus dem Aufnahmeraum 3 auf. Als Steuerungsmittel zur Steuerung der Absaugung der Abluft 18 aus dem Aufnahmeraum 3 dient ein steuerbares Ventil 19.

Das Ventil 19 ist im Bereich eines Fluidauslasses 20 im Boden des Aufnahmeraums 3 angeordnet.

Abstromseitig zum Fluidauslass 20 ist eine Einrichtung zur Kondensation von in der aus dem Aufnahmeraum 3 abgesaugten Abluft enthaltenem Wasserdampf angeordnet. Die Kondensationseinrichtung 28 umfasst ein Kanalsystem mit mäanderförmigen Kanälen. Im Kanalsystem ist Kühlwasser 29 angeordnet. Zum Befüllen der Kondensationseinrichtung 28 mit Kühlwasser 29 dient ein Frischwassereinlauf 30. Zum Entleeren der Kondensationseinrichtung 28 dient eine Abwasserleitung 31.

Der Frischwassereinlauf 30 und die Abwasserleitung 31 sind in den Figuren nur schematisch dargestellt. Sie werden zusammen als Festwasseranschluss bezeichnet. Der Festwasseranschluss kann außerdem zur Reinigung des Aufnahmeraums 3 verwendet werden. Hierfür kann das Gargerät 1 ein spezielles Reinigungsprogramm aufweisen. Damit ist eine automatisierte Reinigung des Aufnahmeraums 3 möglich.

Für Details der Kondensationseinrichtung 28 sei exemplarisch auf die DE 10 2008 012 961 A1 verwiesen.

Das Ventil 19 ist in signalübertragender Weise mit einer zentralen Steuerungseinrichtung 21 verbunden. Die zentrale Steuerungseinrichtung 21 ist in einem gekapselten Elektronikgehäuse 22 angeordnet. Das Elektronikgehäuse 22 ist insbesondere flüssigkeitsdicht, insbesondere dampfdicht, gekapselt ausgebildet. Das Elektronikgehäuse 22 ist insbesondere im Strömungsleitsystem 16, insbesondere im Teilsystem zur Führung der Kühlluft 17, angeordnet. Die Kühlluft 17 dient somit zur Kühlung des Elektronikgehäuses 22, insbesondere der darin angeordneten elektrischen und/oder elektronischen Komponenten. Im Elektronikgehäuse 22 können sämtliche elektrischen und elektronischen Komponenten zur Steuerung des Gargeräts 1 angeordnet sein.

Wie in den Figuren dargestellt, kann das Elektronikgehäuse 22 oberhalb des Aufnahmeraums 3, insbesondere im Bereich der Oberseite 7 des Gehäuses 2, angeordnet sein. Alternativ hierzu ist es möglich, das Elektronikgehäuse 22 unterhalb des Aufnahmeraums 3, insbesondere im Bereich des Bodens 6 des Gehäuses 2, anzuordnen. Hierdurch kann ein verbesserter Schutz vor Überhitzung der elektrischen und/oder elektronischen Komponenten erreicht werden.

Die Lüftungseinrichtung umfasst weiterhin ein Steuerungsmittel zur Steuerung der Frischluftzufuhr zum Aufnahmeraum 3. Als Steuerungsmittel zur Steuerung der Frischluftzufuhr zum Aufnahmeraum 3 dient eine Lüfterklappe 23 oder ein Ventil oder allgemein ein Stellelement, insbesondere ein regelbares Stellelement.

Mit Hilfe der Lüfterklappe 23 ist eine Frischluftöffnung 34, durch welche dem Aufnahmeraum 3 Frischluft zugeführt werden kann, verschließbar. Dem Aufnahmeraum 3 kann Frischluft von der Geräterückseite her zugeführt werden. Die dem Aufnahmeraum 3 zugeführte Frischluft kann insbesondere führungslos von der Geräterückseite her zugeführt werden. Sie kann insbesondere über einen Strömungsweg, welche nicht mit dem Frischlufteinlass 11 in Strömungsverbindung steht, zugeführt werden. Die dem Aufnahmeraum 3 zugeführte Frischluft ist insbesondere unabhängig von der durch den Frischlufteinlass 11 angesaugten Kühlluft 17.

Das Steuerungsmittel zur Steuerung der Frischluftzufuhr zum Aufnahmeraum 3 ist in signalübertragender Weise mit der zentralen Steuerungseinrichtung 21 verbunden.

Das Steuerungsmittel zur Steuerung der Frischluftzufuhr zum Aufnahmeraum 3 ist beispielsweise im Bereich der Rückseite des Aufnahmeraums 3 angeordnet. Andere Anordnungen sind ebenso möglich.

Außerdem umfasst die Lüftungseinrichtung mindestens ein Steuerungsmittel zur Steuerung der Zuführung des Luftstroms der in das Gehäuse 2 angesaugten Kühlluft 17 zum Luftstrom der aus dem Aufnahmeraum 3 abgesaugten Abluft 18. Dieses Steuerungsmittel ist als verstellbare Klappe 24 ausgebildet. Es kann auch als Ventil, insbesondere als Mehrwegventil, insbesondere mit mindestens zwei Eingängen und einem Ausgang, ausgebildet sein.

Die Verschlussklappe 24 ist in signalübertragender Weise mit der zentralen Steuerungseinrichtung 21 verbunden.

Vorzugsweise sind sämtliche Steuerungsmittel der Lüftungseinrichtung direkt oder indirekt miteinander gekoppelt. Sie sind erfindungsgemäß alle jeweils mit der zentralen Steuerungseinrichtung 21 in signalübertragender Weise verbunden.

Außerdem umfasst das Gargerät 1, insbesondere die Lüftungseinrichtung, ein Mittel zur Reinigung von Abluft. Als Mittel zur Reinigung von Abluft dient ein Filtermodul 25. Das Filtermodul 25 umfasst insbesondere einen Geruchsfilter. Es kann auch einen Fettfilter und/oder weitere Filter umfassen. Das Filtermodul 25 ist insbesondere im Bereich der Vorderseite 4 des Gargeräts 1 angeordnet. Es ist insbesondere hinter einer entfernbaren Frontblende 26 angeordnet.

Das Filtermodul 25 ist vorzugsweise aus dem Gehäuse 2 entnehmbar. Es ist insbesondere austauschbar. Das Filtermodul 25 ist insbesondere werkzeuglos aus dem Gehäuse 2 entnehmbar. Dies erleichtert den Austausch des Filtermoduls 25.

Das Filtermodul 25 ist derart im Strömungsleitsystem 16 angeordnet, dass es sowohl von der Abluft 18 als auch von der Kühlluft 17 durchströmt wird.

Das Filtermodul 25 ist in Strömungsrichtung vor dem Elektronikgehäuse 22 angeordnet. Das Elektronikgehäuse 22 wird somit beim Betrieb des Gargeräts **1,** insbesondere beim Betrieb der Lüftungseinrichtung, von gereinigter Luft umspült.

Das Filtermodul 25 ist insbesondere in Strömungsrichtung vor dem Lüfter 15 angeordnet. Der Lüfter 15 wird somit beim Betrieb der Lüftungseinrichtung mit gereinigter Luft beaufschlagt.

Im Strömungsleitsystem 16 kann eine Sensoreinrichtung 35 zur Erfassung der Temperatur und/oder Feuchte des mittels des Lüfters 15 erzeugten Volumenstroms V° angeordnet sein. Die Sensoreinrichtung 35 ist beispielsweise im Bereich des Filtermoduls 25 angeordnet. Sie kann auch im Bereich des Elektronikgehäuses 22 oder im Bereich des Lüfters 15 angeordnet sein. Sie ist vorzugsweise aufstromseitig zum Lüfter 15 angeordnet.

Die Sensoreinrichtung 35 ist vorzugsweise abstromseitig zur Zuführöffnung 33, insbesondere beabstandet zu dieser angeordnet.

Die Details der Lüftungseinrichtung sowie insbesondere die Details des Filtermoduls 25 sind unabhängig von den übrigen Details des Gargeräts 1 vorteilhaft und führen für sich genommen zu einer Verbesserung einer Vorrichtung zum Erhitzen von Gargut.

Die Frontblende 26 kann insbesondere eine Anzeige und/oder eine Bedieneinrichtung mit einem oder mehreren Bedienelementen aufweisen. Hierbei kann es sich insbesondere um eine berührungsempfindliche Anzeige (Touchdisplay) handeln.

Die Anzeige kann insbesondere ein sehr stark getöntes Frontglas aufweisen (Black-Panel-Effekt). Hierdurch kann erreicht werden, dass Konturen zwischen einem Display, benachbarten Funktionskomponenten wie kapazitiven Tastern und einem Gehäuse beziehungsweise Sperrdruck nicht sichtbar sind.

Außerdem umfasst das Gargerät 1 eine im Aufnahmeraum 3 angeordnete Sensoreinrichtung 27. Die Sensoreinrichtung 27 umfasst mindestens einen Sensor zur Erfassung der Temperatur und/oder der Feuchte im Aufnahmeraum 3. Die Sensoreinrichtung 27 ist in signalübertragender Weise mit der zentralen Steuerungseinrichtung 21 verbunden. Mit Hilfe der Sensoreinrichtung 27 ist insbesondere eine rückgekoppelte Steuerung der Steuerungsmittel der Lüftungseinrichtung, insbesondere der Lüfterklappe 23 und/oder des Ventils 19 und/oder der Klappe 24 möglich.

Außerdem weist das Gargerät 1 eine ebenfalls nur schematisch dargestellte Einrichtung 32 zur Steuerung der Feuchte im Aufnahmeraum 3 auf. Die Einrichtung 32 zur Steuerung der Feuchte im Aufnahmeraum 3 ist vorzugsweise an den Festwasseranschluss angeschlossen.

Im Folgenden werden unterschiedliche Funktionen des Gargeräts 1 sowie ein Verfahren zu dessen Betreiben beschrieben.

Das Gargerät 1 weist unterschiedliche Funktionsmodi auf. Die unterschiedlichen Funktionsmodi unterscheiden sich insbesondere durch den Anteil der aus dem Aufnahmeraum 3 abgesaugten Abluft 18 an dem vom Lüfter 15 erzeugten Volumenstrom V°.

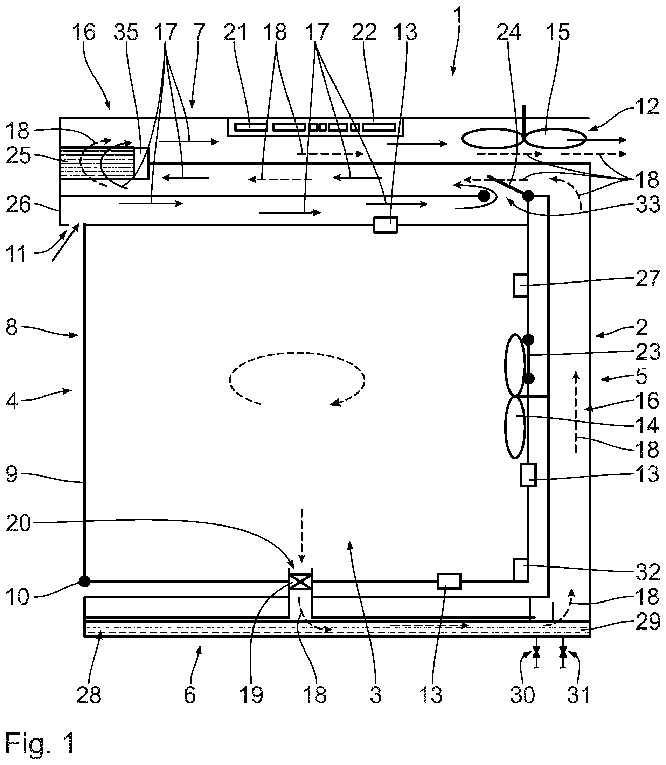

In einem ersten Funktionsmodus, welcher in Fig. 1 dargestellt ist, beträgt der Anteil der aus dem Aufnahmeraum 3 abgesaugten Abluft 18 am gesamten, vom Lüfter 15 erzeugten Volumenstrom V° höchstens 10 %. Der Lüfter 15 saugt in diesem Funktionsmodus mit anderen Worten im Wesentlichen ausschließlich Frischluft durch den Frischlufteinlass **11** an. Die Frischluft wird durch das Strömungsleitsystem 16 am Elektronikgehäuse 22 vorbeigeführt. Sie dient primär zur Kühlung des Elektronikgehäuses 22 sowie insbesondere der darin angeordneten elektrischen/elektronischen Komponenten.

In diesem Funktionsmodus ist die Lüfterklappe 23 zum Aufnahmeraum 3 im Wesentlichen geschlossen. Sie kann jedoch passiv betätigbar sein. Hierunter sei verstanden, dass sie bei Erreichen eines bestimmten Unterdrucks im Aufnahmeraum 3 ein Nachströmen von Frischluft in den Aufnahmeraum 3 ermöglicht.

Der Fluidauslass 20 kann immer offen sein. Alternativ hierzu kann der Fluidauslass 20 im ersten Funktionsmodus im Wesentlichen geschlossen sein. In diesem Fall ist er vorzugsweise mittels eines steuerbaren Ventils steuerbar, insbesondere regelbar.

Ein passives Austreten von Fluiden aus dem Aufnahmeraum 3 ist auch im ersten Funktionsmodus , beispielsweise zum Druckausgleich, möglich. Es ist auch möglich, fortwährend einen relativ geringen Volumenstrom von Abluft 18 aus dem Aufnahmeraum 3 zu fördern. Hierdurch ist eine fortwährende, kontinuierliche Umwälzung der Atmosphäre im Aufnahmeraum 3 möglich. Dies kann zur Erfassung und Steuerung, insbesondere Regelung, der Temperatur und/oder Feuchte im Aufnahmeraum 3 vorteilhaft sein. Hierdurch kann insbesondere die Steuerung des Garprozesses verbessert werden.

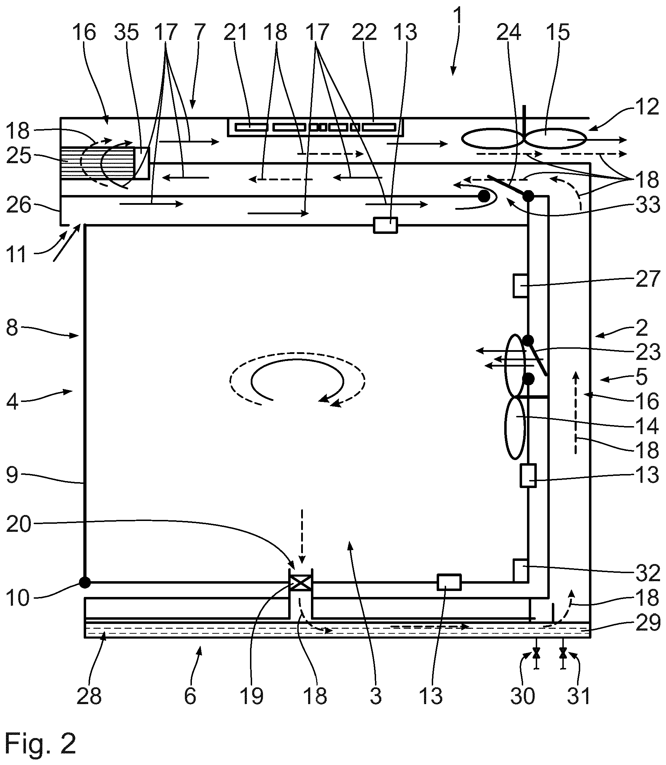

In einem zweiten Funktionsmodus, welcher in der Fig. 2 schematisch dargestellt ist, beträgt der Anteil der aus dem Aufnahmeraum 3 abgesaugten Abluft 18 am gesamten, vom Lüfter 15 erzeugten Volumenstrom V° mindestens 10 % und höchstens 90 %. Er kann insbesondere im Bereich von 20 % bis 80 % liegen.

Dieser Funktionsmodus dient insbesondere zur Reduktion des Dampfgehalts im Aufnahmeraum 3. Er ist insbesondere beim Heißluftbetrieb des Gargeräts 1 vorteilhaft.

Bei diesem Funktionsmodus ist sowohl eine Zuführung von Frischluft zum Aufnahmeraum 3 als auch eine Zuführung von Frischluft zum Luftstrom der aus dem Aufnahmeraum 3 abgesaugten Abluft 18 ermöglicht.

In diesem Funktionsmodus ist die Lüfterklappe 23 geöffnet. Es kann insbesondere eine aktive Zuführung von Frischluft zum Aufnahmeraum 3 erfolgen. Es kann auch ein aktives Absaugen oder Abpumpen von Abluft aus dem Aufnahmeraum 3 durch den Fluidauslass 20 erfolgen.

Die verstellbare Klappe 24 ist in diesem Funktionsmodus in einer Stellung, welche die Zuführung der durch den Frischlufteinlass **11** angesaugten Frischluft 17 zum Luftstrom der Abluft 18 ermöglicht. Die Zuführöffnung 33 ist zumindest teilweise geöffnet.

Die Zuführöffnung 33 ist mittels der verstellbaren Klappe 24 verschließbar. Sie ist insbesondere mittels der verstellbaren Klappe 24 vollständig verschließbar. In diesem Fall ist eine Zuführung der Kühlluft 17 zum Abluftstrom unterbunden.

Die Zuführöffnung 33 ist mittels der verstellbaren Klappe 24 auch teilweise verschließbar. Hierdurch kann der Anteil der Kühlluft 17 am vom Lüfter 15 erzeugten Volumenstrom reguliert werden.

Entsprechend kann mit Hilfe der verstellbaren Klappe 24 der Anteil der Abluft 18 am vom Lüfter 15 erzeugten Volumenstrom V° reguliert werden.

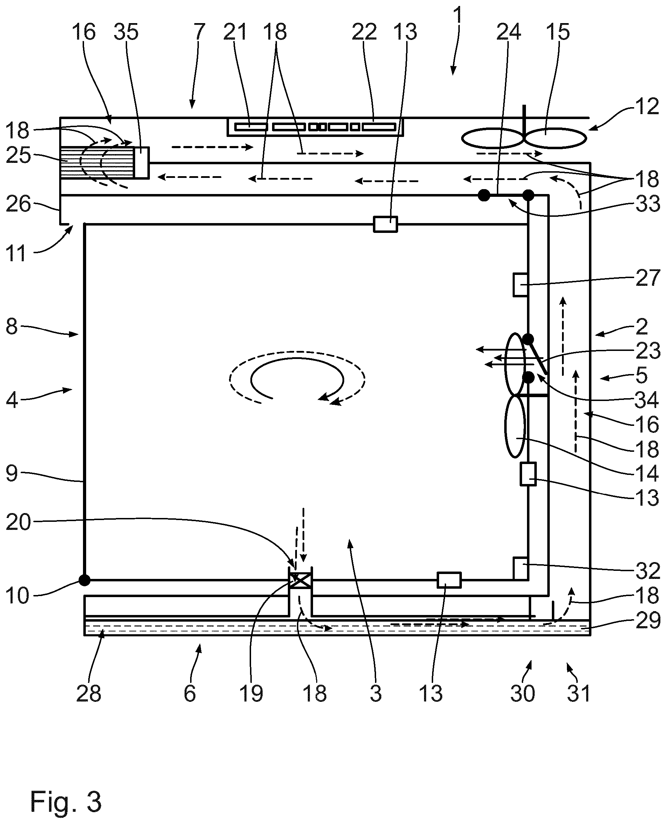

In einem dritten Funktionsmodus, welcher in Fig. 3 dargestellt ist, beträgt der Anteil der aus dem Aufnahmeraum abgesaugten Abluft 18 am vom Lüfter 15 erzeugten Volumenstrom V° mindestens 90 %.

Dieser Modus dient zur schnellen Entleerung des Aufnahmeraums 3. Er ermöglicht insbesondere eine schnelle Reduzierung des Dampfgehalts im Aufnahmeraum 3. Er ermöglicht insbesondere eine schnelle Abkühlung der Atmosphäre im Aufnahmeraum 3.

Dies ist insbesondere vorteilhaft, um ein Ende des Garprozesses präzise zu steuern.

Dies ist außerdem vorteilhaft, um zu verhindern, dass bei einer Öffnung der Türe 9 zum Aufnahmeraum 3 eine große Menge an heißem Dampf austritt.

Bei diesem Funktionsmodus ist eine Zuführung, insbesondere eine direkte Zuführung von Frischluft, zu dem Luftstrom der aus dem Aufnahmeraum 3 abgesaugten Abluft 18 unterbunden. Die Zuführöffnung 33 ist mittels der verstellbaren Klappe 24 vollständig verschlossen.

Optional kann das Absaugen der Abluft aus dem Aufnahmeraum 3 durch den Lüfter 15 in diesem Funktionsmodus durch zusätzliche Mittel unterstützt werden. Es können beispielsweise ein oder mehrere zusätzliche Lüfter zur Erzeugung eines stärkeren Volumenstroms vorgesehen sein. Es ist auch möglich, Fluid aktiv aus dem Aufnahmeraum 3 zu entfernen. Hierfür kann Fluid aus dem Aufnahmeraum 3, insbesondere dampfhaltige Abluft, aus dem Aufnahmeraum 3 abgepumpt werden. Dies kann beispielsweise mit Hilfe einer in den Figuren nicht dargestellten Pumpe geschehen.

Ein schnelles Auswechseln der Atmosphäre im Aufnahmeraum 3 kann auch durch aktives Einleiten von Frischluft zum Aufnahmeraum 3 unterstützt werden. Die Frischluft kann dem Aufnahmeraum 3 insbesondere über die Frischluftöffnung 34 zugeführt werden.

In diesem Funktionsmodus kann ein direktes Zuführen von Kühlluft 17 zum Volumenstrom der Abluft 18 unterbunden sein. Dies ermöglicht ein schnelleres Absaugen der Abluft aus dem Aufnahmeraum 3. Andererseits wird hierdurch die Kühlfunktion der angesaugten Kühlluft 17 unterbunden. Es kann daher vorgesehen sein, den dritten Funktionsmodus jeweils nur für eine vorbestimmte Maximaldauer im Bereich von einigen Sekunden bis einigen Minuten zu ermöglichen. Die Maximaldauer kann insbesondere im Bereich von 3 s bis 3 min, insbesondere im Bereich von bis zu 2 min, insbesondere bis zu 1 min, insbesondere bis zu 30 s, insbesondere bis zu 20 s, insbesondere bis zu 10 s liegen. Anschließend kann es zu einer erzwungenen Öffnung der verstellbaren Klappe 24 kommen. Dieser Zustand kann insbesondere mindestens so lange vorgesehen sein, bis die Temperatur und/oder Feuchte des Volumenstroms im Bereich des Filtermoduls 25, insbesondere im Bereich der Sensoreinrichtung 35, vorgegebene Werte erreicht hat.

Im Folgenden werden weitere Details des Gargeräts 1 beziehungsweise dessen Betriebs stichwortartig beschrieben.

Mit Hilfe der verstellbaren Klappe 24 ist insbesondere steuerbar, welches Mischverhältnis aus Frischluft 17 und Abluft 18 durch das Filtermodul 25 hindurchgeführt wird. Es wurde erkannt, dass hierdurch die Temperatur und die relative Feuchte des durch das Filtermodul 25 hindurchgeführten Fluids steuerbar ist. Dies kann für eine effiziente Reinigung des Abluftstromes vorteilhaft sein.

Mit Hilfe des Filtermoduls 25 ist die aus dem Aufnahmeraum 3 abgesaugte Abluft 18 reinigbar. Sie kann insbesondere von darin enthaltenen Fett- und/oder Geruchs- und/oder Partikelanteilen gereinigt werden.

Durch geeignete Ansteuerung der unterschiedlichen Steuerungsmittel der Lüftungseinrichtung können der Kühlluftstrom und die Atmosphäre im Aufnahmeraum 3 im Wesentlichen unabhängig voneinander gesteuert werden. Hierfür wird erfindungsgemäß lediglich ein einziger, gemeinsamer Lüfter 15 benötigt.

Die schnelle Absaugung der dampfhaltigen Abluft aus dem Aufnahmeraum 3 ermöglicht es, zu verhindern, dass heiße, dampfhaltige Abluft bei der Öffnung des Aufnahmeraums 3 an der Gerätefront austritt. Dies kann die Bedienung des Gerätes verbessern.

Durch eine fortwährende Reinigung der Abluft 18 mit Hilfe des Filtermoduls 25 kann eine Geruchsbelästigung während des Garvorganges reduziert, insbesondere verhindert werden. Dies führt zu einer Verbesserung der Luftqualität in der Küche beziehungsweise allgemein der Luftqualität im Wohnraum.

Die Steuerungsmittel, insbesondere die verstellbare Klappe 24 und/oder die Lüfterklappe 23 und/oder das Ventil 19, können motorisch gesteuert sein. Dies ermöglicht eine besonders flexible Steuerung mit Hilfe der zentralen Steuerungseinrichtung 21.

## Patentansprüche

1. Vorrichtung (1) zum Erhitzen von Gargut mit
1.1. einem Gehäuse (2), welches einen Aufnahmeraum (3) zur Aufnahme des zu erhitzenden Garguts umgibt, welcher aufweist:
1.1.1. eine verschließbare Öffnung (8) zur Bestückung des Aufnahmeraums (3) mit Gargut, und, hiervon separat,
1.1.2. mindestens einen Frischlufteinlass (34) und
1.1.3. mindestens einen Fluidauslass (20), durch welchen ein aktives Absaugen oder Abpumpen von Abluft aus dem Aufnahmeraum (3) erfolgen kann,
1.2. wobei das Gehäuse (2) einen zweiten Frischlufteinlass (11) und einen Abluftauslass (12) aufweist,
1.3. einer Heizeinrichtung (13) zur direkten oder indirekten Übertragung von Wärmeenergie auf das zu erhitzende Gargut und
1.4. einer steuerbaren Lüftungseinrichtung mit
1.4.1. mindestens einem Lüfter (15) zur Erzeugung eines Volumenstroms (V°), wobei der Lüfter (15) im Bereich des Abluftauslasses (12) angeordnet ist,
1.4.2. einem außerhalb des Aufnahmeraums (3) im Gehäuse (2) angeordneten Strömungsleitsystem (16) zum Führen eines Luftstroms mit in das Gehäuse (2) angesaugter Kühlluft (17) und eines Luftstroms mit aus dem Aufnahmeraum (3) abgesaugter Abluft (18),
1.4.2.1. wobei das Strömungsleitsystem (16) ein erstes Teilsystem zum Führen eines Stroms mit Kühlluft (17) umfasst, welche durch, durch den zweiten Frischlufteinlass (11) in das Gehäuse (2) angesaugte, Frischluft gebildet wird und,
1.4.2.2. wobei das Strömungsleitsystem (16) ein zweites Teilsystem zur Führung eines Stroms mit aus dem Aufnahmeraum (3) abgesaugter Abluft (18) umfasst,
1.4.3. mindestens einem Mittel (25) zur Reinigung von Abluft (18),
1.4.4. mindestens einem Steuerungsmittel (19) zur Steuerung der Absaugung der Abluft aus dem Aufnahmeraum (3), wobei als Steuerungsmittel (19) ein steuerbares Ventil (19) dient, welches im Bereich eines Fluidauslasses (20) im Boden des Aufnahmeraums (3) angeordnet ist,
1.4.5. mindestens einem Steuerungsmittel (23) zur Steuerung einer Frischluftzufuhr durch den mindestens einen Frischlufteinlass (34) zum Aufnahmeraum (3), wobei als Steuerungsmittel (23) zur Steuerung der Frischluftzufuhr zum Aufnahmeraum (3) ein Stellelement, insbesondere ein regelbares Stellelement dient,
1.4.6. mindestens einem Steuerungsmittel (24) zur Steuerung einer Zuführung des Luftstroms der in das Gehäuse (2) angesaugten Kühlluft (17) zum Luftstrom der aus dem Aufnahmeraum (3) abgesaugten Abluft (18), wobei das Steuerungsmittel (24) als verstellbare Klappe oder als Ventil, insbesondere als Mehrwegventil ausgebildet ist,
1.4.7. wobei die Vorrichtung eine zentrale Steuereinrichtung (21) aufweist, mit welcher die Steuerungsmittel (19, 23, 24) in signalübertragender Weise verbunden sind,
1.5. wobei die Lüftungseinrichtung zur Steuerung der Be- und Entlüftung des Aufnahmeraums (3) dient,
1.6. wobei die Lüftungseinrichtung mindestens drei unterschiedliche Funktionsmodi ermöglicht:
1.6.1. einen ersten Funktionsmodus, in welchem eine aktive Frischluftzufuhr zum Aufnahmeraum (3) im Wesentlichen unterbunden ist,
1.6.2. einen zweiten Funktionsmodus, in welchem sowohl eine Zuführung von Frischluft zum Aufnahmeraum (3) als auch eine Zuführung von Kühlluft (17) zum Luftstrom der aus dem Aufnahmeraum (3) abgesaugten Abluft (18) ermöglicht ist
1.6.3. einen dritten Funktionsmodus, in welchem eine Zuführung von Kühlluft (17) zum Luftstrom der aus dem Aufnahmeraum (3) abgesaugten Abluft (18) unterbunden ist.

2. Vorrichtung (1) gemäß Anspruch 1, **dadurch gekennzeichnet, dass** im Strömungsleitsystem (16) eine Sensoreinrichtung (35) zur Erfassung der Temperatur und/oder Feuchte des mittels des Lüfters (15) erzeugten Volumenstroms (V°) angeordnet ist.

3. Vorrichtung (1) gemäß einem der vorhergehenden Ansprüche, **dadurch gekennzeichnet, dass** eines oder mehrere der Steuerungsmittel (19, 23, 24) stufenlos steuerbar sind.

4. Vorrichtung (1) gemäß einem der vorhergehenden Ansprüche, **dadurch gekennzeichnet, dass** das Mittel (25) zur Reinigung von Abluft mindestens ein Filtermodul mit mindestens einem Geruchsfilter aufweist.

5. Vorrichtung (1) gemäß einem der vorhergehenden Ansprüche, **dadurch gekennzeichnet, dass** das Mittel (25) zur Reinigung von Abluft von der Vorderseite des Gehäuses (2) aus werkzeuglos austauschbar ist.

6. Vorrichtung (1) gemäß einem der vorhergehenden Ansprüche, **dadurch gekennzeichnet, dass** das Mittel (25) zur Reinigung von Abluft im Strömungsleitsystem (16) in Strömungsrichtung vor dem Lüfter (15) angeordnet ist.

7. Vorrichtung (1) gemäß einem der vorhergehenden Ansprüche, **dadurch gekennzeichnet, dass** das Steuerungsmittel (23) zur Steuerung der Frischluftzufuhr durch den mindestens einen Frischlufteinlass (34) zum Aufnahmeraum (3) in signalübertragender Weise an eine Sensoreinrichtung (27) im Aufnahmeraum (3) gekoppelt ist.

8. Vorrichtung (1) gemäß einem der vorhergehenden Ansprüche, **dadurch gekennzeichnet, dass** ausgangsseitig zum Fluidauslass (20) des Aufnahmeraums (3) eine Einrichtung (28) zur Kondensation von in der aus dem Aufnahmeraum (3) abgesaugten Abluft (18) enthaltenem Wasserdampf angeordnet ist.

9. Vorrichtung (1) gemäß einem der vorhergehenden Ansprüche, **dadurch gekennzeichnet, dass** der Lüfter zur Erzeugung eines Volumenstroms im Bereich von 1 m³/h bis 200 m³/h steuerbar ist.

10. Vorrichtung (1) gemäß einem der vorhergehenden Ansprüche, **dadurch gekennzeichnet, dass** eine Türe (9) zum Verschluss der Öffnung (8) zur Bestückung des Aufnahmeraums (3) mit Gargut in signalübertragender Weise mit einer Verriegelungsvorrichtung gekoppelt ist, welche ein Öffnen der Türe (9) in Abhängigkeit von einem oder mehreren Parametern zulässt oder verhindert.

11. Verfahren zum Betreiben einer Vorrichtung (1) zum Erhitzen von Gargut gemäß einem der vorhergehenden Ansprüche, umfassend die folgenden Schritte:
11.1. Bereitstellen einer Vorrichtung zum Erhitzen von Gargut mit
11.1.1. einem Aufnahmeraum (3) mit einer verschließbaren Öffnung (8) zur Bestückung des Aufnahmeraums (3) mit zu erhitzendem Gargut und
11.1.2. einer steuerbaren Lüftungseinrichtung mit mindestens einem Steuerungsmittel (19) zu Steuerung der Absaugung von Abluft aus dem Aufnahmeraum (3)
11.2. Erhitzen des Garguts im Aufnahmeraum (3),
11.3. Absaugen von Abluft aus dem Aufnahmeraum (3),
11.4. wobei das Absaugen der Abluft aus dem Aufnahmeraum (3) in Abhängigkeit eines vorgegebenen Betriebsprotokolls gesteuert erfolgt,
11.5. wobei eine Zuführung von Kühlluft (17) zum Luftstrom der aus dem Aufnahmeraum (3) abgesaugten Abluft (18) unterbunden werden kann.

12. Verfahren gemäß Anspruch 11, **dadurch gekennzeichnet, dass** ein Öffnen des Aufnahmeraums (3) erst nach Lösen einer Verriegelungsvorrichtung ermöglicht wird.

13. Verfahren gemäß einem der Ansprüche 11 bis 12 **dadurch gekennzeichnet, dass** die Atmosphäre im Aufnahmeraum durch einen Volumenstrom von mehr als 40 m³/h in weniger als 15 s komplett ausgetauscht werden kann.

## Claims

1. Apparatus (1) for heating food to be cooked, having
1.1. a housing (2) which surrounds a receiving space (3) for receiving the food to be cooked which is to be heated, and said receiving space comprises:
1.1.1. a closable opening (8) for loading the receiving space (3) with food to be cooked and, separate from this
1.1.2. at least one fresh air inlet (34) and
1.1.3. at least one fluid outlet (20) through which exhaust air can be actively sucked or pumped out of the receiving space (3),
1.2. wherein the housing (2) comprises a second fresh air inlet (11) and an exhaust air outlet (12),
1.3. a heating device (13) for the direct or indirect transfer of heat energy to the food to be cooked and
1.4. a controllable ventilation device having
1.4.1. at least one fan (15) for generating a volume flow (V°), wherein the fan (15) is arranged in the region of the exhaust air outlet (12),
1.4.2. a flow guiding system (16) that is arranged outside the receiving space (3) in the housing (2) for guiding an air flow with cooling air (17) that is sucked into the housing (2) and an air flow with exhaust air (18) that is sucked out of the receiving space (3),
1.4.2.1. wherein the flow guiding system (16) comprises a first subsystem for guiding a flow with cooling air (17) which is formed by fresh air, that is sucked into the housing (2) through the second fresh air inlet (11), and,
1.4.2.2. wherein the flow guiding system (16) comprises a second subsystem for guiding a flow of exhaust air (18) that is sucked out of the receiving space (3),
1.4.3. at least one means (25) for cleaning exhaust air (18),
1.4.4. at least one control means (19) for controlling the sucking out of the exhaust air from the receiving space (3), wherein a controllable valve (19) is used as the control means (19), which is arranged in the region of a fluid outlet (20) in the bottom of the receiving space (3),
1.4.5. at least one control means (23) for controlling a fresh air supply through the at least one fresh air inlet (34) to the receiving space (3), wherein an actuating element, in particular a controllable actuating element, is used as control means (23) for controlling the fresh air supply to the receiving space (3),
1.4.6. at least one control means (24) for controlling a supply of the air flow of the cooling air (17) that is sucked into the housing (2) to the air flow of the exhaust air (18) that is sucked out of the receiving space (3), wherein the control means (24) is designed as an adjustable flap or as a valve, in particular as a multi-way valve,
1.4.7 wherein the apparatus comprises a central control device (21), to which the control means (19, 23, 24) are connected in a signal-transmitting manner,
1.5. wherein the ventilation device is used to control the ventilation and venting of the receiving space (3),
1.6. wherein the ventilation device renders possible at least three different functional modes:
1.6.1. a first functional mode in which an active fresh air supply to the receiving space (3) is essentially prevented,
1.6.2. a second functional mode, in which both a supply of fresh air to the receiving space (3) and a supply of cooling air (17) to the air flow of the exhaust air (18) that is sucked out of the receiving space (3) is rendered possible
1.6.3. a third functional mode, in which a supply of cooling air (17) to the air flow of the exhaust air (18) that is sucked out of the receiving space (3) is prevented.

2. Apparatus (1) in accordance with Claim 1, **characterised in that** a sensor device (35) for detecting the temperature and/or humidity of the volume flow (V°) that is generated by means of the fan (15) is arranged in the flow guiding system (16).

3. Apparatus (1) in accordance with one of the preceding claims, **characterised in that** one or more of the control means (19, 23, 24) are controllable in an infinitely variable manner.

4. Apparatus (1) in accordance with one of the preceding claims, **characterised in that** the means (25) for cleaning exhaust air comprises at least one filter module having at least one odour filter.

5. Apparatus (1) in accordance with one of the preceding claims, **characterised in that** the means (25) for cleaning exhaust air can be replaced without tools from the front side of the housing (2).

6. Apparatus (1) in accordance with one of the preceding claims, **characterised in that** the means (25) for cleaning exhaust air in the flow guiding system (16) is arranged upstream of the fan (15) in the flow direction.

7. Apparatus (1) in accordance with one of the preceding claims, **characterised in that** the control means (23) for controlling the fresh air supply through the at least one fresh air inlet (34) to the receiving space (3) is coupled in a signal-transmitting manner to a sensor device (27) in the receiving space (3).

8. Apparatus (1) in accordance with one of the preceding claims, **characterised in that** a device (28) for condensing water vapour that is contained in the exhaust air (18) that is sucked out of the receiving space (3) is arranged on the outlet side of the fluid outlet (20) of the receiving space (3).

9. Apparatus (1) in accordance with one of the preceding claims, **characterised in that** the fan is controllable in order to generate a volume flow in the range from 1 m³/h to 200 m³/h.

10. Apparatus (1) in accordance with one of the preceding claims, **characterised in that** a door (9) for closing the opening (8) for loading the receiving space (3) with food to be cooked is coupled in a signal-transmitting manner to a locking apparatus that allows or prevents the door (9) opening in dependence upon one or more parameters.

11. Method for operating an apparatus (1) for heating food to be cooked in accordance with one of the preceding claims,
comprising the following steps:
11.1. providing an apparatus (1) for heating food to be cooked, having
11.1.1. a receiving space (3) having a closable opening (8) for loading the receiving space (3) with food to be cooked which is to be heated and
11.1.2. a controllable ventilation device having at least one control means (19) for controlling the sucking out of exhaust air from the receiving space (3)
11.2. heating the food to be cooked in the receiving space (3),
11.3. sucking out exhaust air from the receiving space (3),
11.4. wherein the exhaust air is sucked out of the receiving space (3) in a controlled manner in dependence upon a predetermined operating protocol,
11.5. wherein a supply of cooling air (17) to the air flow of the exhaust air (18) that is sucked out of the receiving space (3) can be prevented.

12. Method in accordance with Claim 11, **characterised in that** opening of the receiving space (3) is only rendered possible after a locking device has been released.

13. Method in accordance with one of claims 11 to 12, **characterized in that** the atmosphere in the receiving space can be completely replaced in less than 15 s by a volume flow of more than 40 m³/h.

## Revendications

1. Dispositif (1) destiné à chauffer des aliments de cuisson, comportant
1.1. un boîtier (2) qui entoure un espace de réception (3) destiné à recevoir des aliments de cuisson à chauffer, qui comporte :
1.1.1. une ouverture apte à être fermée (8) pour charger l'espace de réception (3) avec des aliments de cuisson, et, séparément de celui-ci,
1.1.2. au moins une entrée d'air frais (34), et
1.1.3. au moins une sortie de fluide (20) par laquelle une extraction active par aspiration ou par pompage de l'air vicié à partir de l'espace de réception (3) peut être effectué,
1.2. dans lequel le boîtier (2) comporte une seconde entrée d'air frais (11) et une sortie d'air vicié (12),
1.3. un dispositif de chauffage (13) pour le transfert direct ou indirect d'énergie thermique aux aliments de cuisson à chauffer et
1.4. un dispositif de ventilation apte à être commandé avec
1.4.1. au moins un ventilateur (15) pour générer un débit volumique (V°), le ventilateur (15) étant disposé au niveau de la sortie d'air vicié (12),
1.4.2. un système de guidage d'écoulement (16) disposé à l'extérieur de l'espace de réception (3) dans le boîtier (2), pour guider un flux d'air avec de l'air de refroidissement (17) aspiré dans le boîtier (2) et un flux d'air avec de l'air vicié (18) extrait par aspiration à partir de l'espace de réception (3),
1.4.2.1. le système de guidage d'écoulement (16) comprenant un premier sous-système pour guider un flux avec de l'air de refroidissement (17), qui est formé par de l'air frais, aspiré dans le boîtier (2) par la seconde entrée d'air frais (11), et,
1.4.2.2. le système de guidage d'écoulement (16) comprenant un second sous-système pour guider un flux avec de l'air vicié (18) extrait par aspiration à partir de l'espace de réception (3),
1.4.3. au moins un moyen (25) pour épurer de l'air vicié (18),
1.4.4. au moins un moyen de commande (19) pour commander l'extraction par aspiration de l'air vicié à partir de l'espace de réception (3), dans lequel une valve apte à être commandée (19) sert de moyen de commande (19), laquelle valve est disposée au niveau d'une sortie de fluide (20) au fond de l'espace de réception (3),
1.4.5. au moins un moyen de commande (23) pour commander un acheminement d'air frais vers l'espace de réception (3) par ladite au moins une entrée d'air frais (34), dans lequel un actionneur, en particulier un actionneur régulable, sert de moyen de commande (23) pour commander l'acheminement d'air frais vers l'espace de réception (3),
1.4.6. au moins un moyen de commande (24) pour commander un acheminement du flux d'air de l'air de refroidissement (17) aspiré dans le boîtier (2) jusqu'au flux d'air de l'air vicié (18) extrait par aspiration à partir de l'espace de réception (3), dans lequel le moyen de commande (24) est conçu comme un clapet réglable ou comme une valve, en particulier une valve à plusieurs voies,
1.4.7 dans lequel le dispositif comporte un dispositif de commande central (21) auquel les moyens de commande (19, 23, 24) sont reliés de manière à transmettre des signaux,
1.5. dans lequel le dispositif de ventilation sert à commander la ventilation et l'aération de l'espace de réception (3),
1.6. dans lequel le dispositif de ventilation permet au moins trois différents modes de fonctionnement :
1.6.1. un premier mode de fonctionnement dans lequel un acheminement actif d'air frais vers l'espace de réception (3) est essentiellement empêché,
1.6.2. un deuxième mode de fonctionnement dans lequel aussi bien un acheminement d'air frais vers l'espace de réception (3) qu'un acheminement d'air de refroidissement (17) vers le flux d'air de l'air vicié (18) extrait par aspiration à partir de l'espace de réception (3) est permis,
1.6.3. un troisième mode de fonctionnement dans lequel un acheminement d'air de refroidissement (17) vers le flux d'air de l'air vicié (18) extrait par aspiration à partir de l'espace de réception (3) est empêché.

2. Dispositif (1) selon la revendication 1, **caractérisé en ce qu'un** dispositif de capteur (35) est disposé dans le système de guidage d'écoulement (16) pour détecter la température et/ou l'humidité du débit volumique (V°) généré au moyen du ventilateur (15).

3. Dispositif (1) selon l'une des revendications précédentes, **caractérisé en ce qu'un** ou plusieurs des moyens de commande (19, 23, 24) peuvent être commandés de façon continue.

4. Dispositif (1) selon l'une des revendications précédentes, **caractérisé en ce que** le moyen (25) pour épurer de l'air vicié comporte au moins un module filtrant avec au moins un filtre anti-odeur.

5. Dispositif (1) selon l'une des revendications précédentes, **caractérisé en ce que le** moyen (25) pour épurer de l'air vicié est interchangeable sans outils à partir du côté avant du boîtier (2).

6. Dispositif (1) selon l'une des revendications précédentes, **caractérisé en ce que** le moyen (25) pour épurer de l'air vicié est disposé dans le système de guidage d'écoulement (16) en amont du ventilateur (15) dans la direction d'écoulement.

7. Dispositif (1) selon l'une des revendications précédentes, **caractérisé en ce que** le moyen de commande (23) pour commander l'acheminement d'air frais vers l'espace de réception (3) par ladite au moins une entrée d'air frais (34) est couplé à un dispositif de capteur (27) dans l'espace de réception (3) de manière à transmettre des signaux.

8. Dispositif (1) selon l'une des revendications précédentes, **caractérisé en ce que,** côté sortie de la sortie de fluide (20) de l'espace de réception (3), est disposé un dispositif (28) pour la condensation de la vapeur d'eau contenue dans l'air vicié (18) extrait par aspiration à partir de l'espace de réception (3).

9. Dispositif (1) selon l'une des revendications précédentes, **caractérisé en ce que** le ventilateur peut être commandé pour générer un débit volumique dans la plage de 1 m³/h à 200 m³/h.

10. Dispositif (1) selon l'une des revendications précédentes, **caractérisé en ce qu'**une porte (9) destinée à fermer l'ouverture (8) pour charger l'espace de réception (3) avec des aliments de cuisson est couplée à un dispositif de verrouillage de manière à transmettre des signaux, qui permet ou empêche une ouverture de la porte (9) en fonction d'un ou plusieurs paramètres.

11. Procédé pour faire fonctionner un dispositif (1) destiné à chauffer des aliments de cuisson selon l'une des revendications précédentes, comprenant les étapes suivantes consistant à :
11.1 fournir un dispositif pour chauffer des aliments de cuisson avec
11.1.1. un espace de réception (3) avec une ouverture apte à être fermée (8) pour charger l'espace de réception (3) avec des aliments de cuisson à chauffer et
11.1.2. un dispositif de ventilation apte à être commandé avec au moins un moyen de commande (19) pour commander l'extraction par aspiration de l'air vicié à partir de l'espace de réception (3)
11.2. chauffer les aliments de cuisson dans l'espace de réception (3),
11.3. extraire par aspiration de l'air vicié à partir de l'espace de réception (3),
11.4. dans lequel l'extraction de l'air vicié à partir de l'espace de réception (3) est effectuée de manière commandée en fonction d'un protocole de fonctionnement prédéfini,
11.5. dans lequel un refroidissement (17) vers le flux d'air de l'air vicié (18) extrait par aspiration à partir de l'espace de réception (3) peut être empêchée.

12. Procédé selon la revendication 11, **caractérisé en ce qu'**une ouverture de l'espace de réception (3) n'est possible qu'après libération d'un dispositif de verrouillage.

13. Procédé selon l'une des revendications 11 à 12, **caractérisé en ce que** l'atmosphère dans l'espace de réception peut être entièrement substituée par un débit volumique supérieur à 40 m³/h en moins de 15 s.
